Europäisches Patentamt

(19) European Patent Office

Office européen des brevets

(11) Numéro de publication: **0 272 183 B1**

# FASCICULE DE BREVET EUROPEEN

(45) Date de publication de fascicule du brevet:
02.05.91

(51) Int. Cl.5: **C05G 1/06, B01J 19/26**

(21) Numéro de dépôt: 87402801.2

(22) Date de dépôt: 10.12.87

(54) **Fabrication de phosphates d'ammonium contenant du sulfate d'ammonium.**

(30) Priorité: 18.12.86 GR 862922

(43) Date de publication de la demande:
22.06.88 Bulletin 88/25

(45) Mention de la délivrance du brevet:
02.05.91 Bulletin 91/18

(84) Etats contractants désignés:
AT BE CH DE ES FR GB GR IT LI LU NL SE

(56) Documents cités:
EP-A- 0 083 122
FR-A- 2 125 506
FR-A- 2 156 375
US-A- 3 310 371
US-A- 3 954 942

(73) Titulaire: **CdF CHIMIE AZOTE ET FERTILI-
SANTS S.A.**
**143 Route d'Espagne B.P. No. 3145**
**F-31053 Toulouse(FR)**

(72) Inventeur: **Belis, Dimitrios**
**Arrrianou 16**
**GR-546 35 Thessalonique(GR)**
Inventeur: **Chinal, Pierre**
**23 Rue des Haies**
**F-76160 Martin du Vivier(FR)**
Inventeur: **Priat, Jean François**
**23 Rue des Capucines**
**F-76420 Bihorel(FR)**

(74) Mandataire: **Rieux, Michel et al**
**NORSOLOR Service Propriété Industrielle**
**Tour Aurore 18, Place des Reflets Cedex no.
5**
**F-92080 Paris la Défense 2(FR)**

## Description

La présente invention concerne l'utilisation d'un réacteur tubulaire perfectionné pour la fabrication de phosphates d'ammonium contenant du sulfate d'ammonium. Ces phosphates contenant du sulfate sont utilisés comme engrais et la quantité de sulfate varie selon la formule d'engrais désirée.

Les réacteurs tubulaires sont bien connus. Il consiste en une simple longueur de tube de relativement faible diamètre sans garnissage interne. Les réacteurs tubulaires généralement utilisés sont horizontaux ou faiblement inclinés (au plus 45°) par rapport à l'horizontale. Ils ont un diamètre intérieur compris entre 200 et 10 mm pour une longueur de 1,50 m à 10 m. Le rapport longueur/diamètre n'est en général pas inférieur à 50. Des réacteurs tubulaires sont par exemple décrits dans les brevets USA 39549421 et 3310371 et français n° 2172826 et 2199478.

Ils sont utilisés pour la neutralisation d'acides, en particulier d'acide phosphorique pour la fabrication de phosphates d'ammonium ou de polyphosphates ou de mélanges d'acide phosphorique et d'acide sulfurique. Généralement le réacteur est situé à l'entrée d'un granulateur ou d'un sécheur. Les gaz sortant du granulateur et du sécheur sont lavés, et les eaux de lavage sont fréquemment recyclées dans l'installation de fabrication d'engrais, en particulier dans le réacteur tubulaire.

On connaît également des dispositifs permettant d'opérer avantageusement le mélange d'un gaz avec des liquides dans un réacteur tubulaire pour amener des fluides liquides dans une zone de mélange en utilisant en particulier des canalisations coaxiales parallèles à l'axe du réacteur tubulaire, c'est le cas du dispositif décrit dans le brevet français 2 125 506.

La présente invention concerne l'utilisation d'un réacteur tubulaire pour la fabrication de phosphates d'ammonium contenant de sulfate d'ammonium dans lequel on introduit dans le réacteur de l'eau et/ou des eaux de lavage des gaz. Dans ce cas, comme on traite un mélange d'acide phosphorique et d'acide sulfurique on se heurte à de nombreux problèmes de corrosion. Pour diminuer la corrosion on a proposé de diluer l'ammoniac par de l'eau et/ou des eaux de lavage (USP 3954942) mais il y a encore corrosion de l'injecteur d'ammoniac. Il n'est pas possible de diluer l'acide sulfurique avant son introduction dans le tube car cette dilution est fortement exothermique. Une des solutions actuellement utilisée est de diluer l'acide phosphorique. Mais les risques de corrosion ne sont pas nuls et il est nécessaire de gainer de polytétrafluoroéthylène toute la paroi interne de la tête du tube. Mais la mise en place de cette gaine demande des usinages et des emboitages difficiles, d'autant plus que le polytétrafluoéthyléne a un coefficient de dilatation important. D'autre part il n'existe pas dans le commerce de pièces de grandes dimensions en polyfluorotétraéthylène et on est obligé pour garnir la tête du réacteur tubulaire d'ajuster un grand nombre de pièces. La demanderesse a essayé d'introduire dans le réacteur tubulaire l'eau et/ou les eaux de lavage par deux conduites parallèles à l'axe du réacteur tubulaire. Mais dans ce cas la corrosion de la conduite d'alimentation en eau et/ou eaux de lavage est très rapide.

Le réacteur utilisé selon la présente invention permet de préparer des phosphates d'ammonium contenant des sulfates sans qu'il y ait de problème de corrosion.

La présente invention concerne l'utilisation d'un réacteur tubulaire perfectionné pour la fabrication de phosphates d'ammonium contenant du sulfate d'ammonium muni à sa tête de conduites d'alimentation en acide phosphorique, acide sulfurique, ammoniac liquide et en eau et/ou d'eaux de lavage caractérisé par le fait que la conduite d'alimentation en eau et/ou eaux de lavage et la conduite d'alimentation en ammoniac liquide sont concentriques et symétriques par rapport à l'axe du réacteur tubulaire et que la conduite d'alimentation en eau et/ou eaux de lavage est à l'intérieur de la conduite d'alimentation en ammoniac liquide.

Dans ces conditions on a constaté que la corrosion est quasiment nulle, en particulier il n'y a plus corrosion de la conduite d'alimentation en eau/ou eaux de lavage.

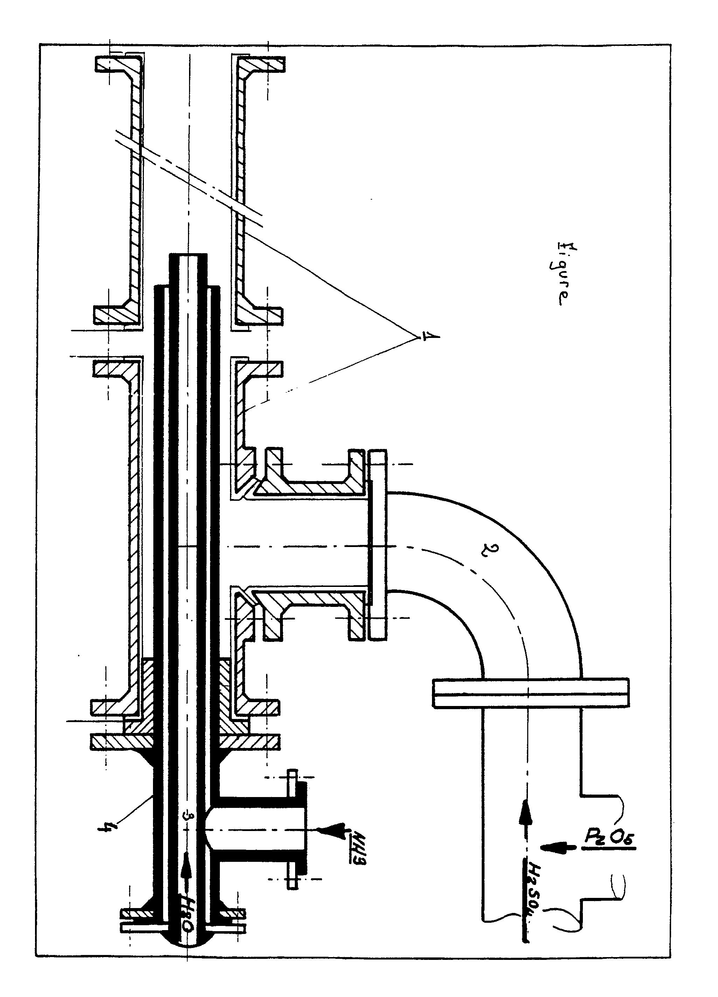

La description donnée ci-dessous d'un réacteur tubulaire perfectionné et la figure jointe permettront de mieux comprendre l'invention.

La figure jointe est une vue en coupe longitudinale partielle d'un réacteur tubulaire (1). Selon le mode de réalisation représenté, à la tête du réacteur tubulaire se trouve une conduite d'alimentation (2) en mélange d'acide sulfurique et d'acide phosphorique. Cette conduite sulfurique s'ouvre perpendiculairement dans le réacteur tubulaire (1). Cette conduite pourrait s'ouvrir tangentiellement dans le réacteur tubulaire (1). On pourrait également prévoir d'introduire l'acide phosphorique et l'acide sulfurique par deux conduites séparées, de préférence diamétralement opposées, ces conduites pouvant également s'ouvrir perpendiculairement ou tangentiellement dans le réacteur tubulaire (1). Dans l'axe du réacteur tubulaire (1) se trouvent la conduite d'alimentation en eau et/ou eaux de lavage (3) et la conduite d'alimentation en ammonicaa circule (4). Ces deux conduites (3) et (4) sont concentriques et l'ammoniac circule dans l'espace annulaire compris entre les conduites (3) et (4). Dans ces conditions l'eau et/ou les eaux de lavage sont refroidies par l'ammoniac liquide. Les conduites (3) et (4) sont de préférence en acier inoxyda-

ble. On peut éventuellement prévoir de revêtir les parois extérieures de la conduite (4) d'une couche de polytétrafluoréthylène.

EXEMPLE

Dans un réacteur tubulaire ayant un diamètre de 150 mm et une longueur de 5,00 m on introduit :

- 12 t/h d'ammoniac liquide
- 18 m³/h d'acide sulfurique à 93%
- 30 m³/h d'acide phosphorique à 26%
- 12 m³/h d'eaux de lavage des gaz sortant de l'atelier de granulation

Lorsqu'on utilise un réacteur tubulaire dont la tête est identique à celle représentée sur la figure jointe sauf que les conduites d'alimentation (3) et (4) ne sont pas concentriques mais séparées et parallèles on constate que la conduite d'alimentation (3) en eau et/ou eaux de lavage est complètement corrodée en moins de 10 jours.

Lorsque comme représenté sur la figure jointe les conduites sont concentriques on constate qu'après plus d'un an la conduite d'alimentation en eau de lavage (3) n'est toujours pas corrodée.

**Revendications**

1. Procédé de préparation de phosphates d'ammonium contenant du sulfate d'ammonium à partir d'acide phosphorique, d'acide sulfurique, d'ammoniac liquide et d'eau et/ou d'eaux de lavage caractérisé en ce qu'il met en oeuvre un réacteur tubulaire, en ce que l'acide sulfurique et l'acide phosphorique sont introduits en tête du réacteur et en ce que l'eau et/ou les eaux du lavage et l'ammoniac liquide sont introduits dans le réacteur tubulaire par l'intermédiaire de conduites concentriques et symétriques par rapport à l'axe, la conduite d'alimentation en eau et/ou eaux du lavage étant à l'intérieur de la conduite d'alimentation en ammoniac liquide.

**Claims**

1. Process for the preparation of ammonium phosphates containing ammonium sulphate from phosphoric acid, sulphuric acid, liquid ammonia and water and/or wash liquors, characterized in that it makes use of a tubular reactor, in that the sulphuric acid and the phosphoric acid are introduced at the head of the reactor and in that the water and/or the wash liquors and the liquid ammonia are introduced into the tubular reactor by means of conduits which are concentric and symmetrical in relation to the axis, the water and/or wash liquor feed conduit being inside the liquid ammonia feed conduit.

**Ansprüche**

1. Verfahren zur Herstellung von Ammoniumsulfat enthaltenden Ammoniumphosphaten aus Phosphorsäure, Schwefelsäure, Salmiakgeist und Wasser und/oder Waschwässern, dadurch gekennzeichnet, daß ein rohrförmiger Reaktor eingesetzt wird, daß die Schwefelsäure und die Phosphorsäure am Reaktorkopf eingespeist werden und daß das Wasser und/oder die Waschwässer und der Salmiakgeist in den rohrförmigen Reaktor mittels in bezug auf die Achse konzentrischer und symmetrischer Leitungen eingespeist werden, wobei sich die Speiseleitungen für das Wasser und/oder die Waschwässer innerhalb der Speiseleitung für den Salmiakgeist befinden.

Figure